(19) Europäisches Patentamt

European Patent Office

Office européen des brevets

(11) **EP 1 652 377 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **03817916.4**

(22) Anmeldetag: **06.08.2003**

(51) Int Cl.:
*H04N 5/74* (2006.01)     *G02B 26/10* (2006.01)

(86) Internationale Anmeldenummer:
**PCT/DE2003/002633**

(87) Internationale Veröffentlichungsnummer:
**WO 2005/015903 (17.02.2005 Gazette 2005/07)**

(54) **VORRICHTUNG UND VERFAHREN ZUR BILDPROJEKTION UND/ODER MATERIALBEARBEITUNG**

APPARATUS AND METHOD FOR PROJECTING IMAGES AND/OR PROCESSING MATERIALS

DISPOSITIF ET PROCEDE POUR LA PROJECTION D'IMAGE ET/OU L'USINAGE DE MATIERE

(84) Benannte Vertragsstaaten:
**DE**

(43) Veröffentlichungstag der Anmeldung:
**03.05.2006 Patentblatt 2006/18**

(73) Patentinhaber: **Fraunhofer-Gesellschaft zur Förderung der angewandten Forschung e.V. 80686 München (DE)**

(72) Erfinder: **SCHENK, Harald 01139 Dresden (DE)**

(74) Vertreter: **Gagel, Roland Patentanwalt Dr. Roland Gagel, Landsberger Strasse 480a 81241 München (DE)**

(56) Entgegenhaltungen:
**WO-A-03/032046          US-A1- 2002 196 226**

**Beschreibung**

**Technisches Anwendungsgebiet**

Die vorliegende Erfindung betrifft eine Vorrichtung zur Bildprojektion und/oder Materialbearbeitung, die eine Ablenkeinrichtung zur variablen Ablenkung eines von einer Lichtquelle ausgehenden Lichtstrahls auf eine Projektions- oder Bearbeitungsfläche, eine Modulationseinrichtung zur Modulation einer Intensität des Lichtstrahls und eine mit der Modulationseinrichtung verbundene Steuereinheit aufweist, mit der die Modulationseinrichtung zur Modulation der Intensität des Lichtstrahls in Abhängigkeit von Eingangsdaten ansteuerbar ist. Die Erfindung betrifft weiterhin ein Verfahren zur Bildprojektion und/oder Materialbearbeitung, bei dem ein Lichtstrahl mittels einer Ablenkeinrichtung über einen Bild- oder Bearbeitungsbereich einer Projektions- oder Bearbeitungsfläche geführt und gleichzeitig in Abhängigkeit von Eingangsdaten in der Intensität moduliert wird, um eine den Eingangsdaten entsprechende Bildprojektion oder Materialbearbeitung zu erreichen.

Bei Verwendung einer Vorrichtung der genannten Art für die Bildprojektion wird der Bildbereich der Projektionsfläche in der Regel mit konstanter Zeilen- und Spaltenfrequenz mit dem Lichtstrahl abgetastet, während die Intensität des Lichtstrahls gleichzeitig in Abhängigkeit von den Eingangsdaten zur Darstellung eines Bildes oder einer Bildfolge moduliert wird. Das Bild kann dabei der Informationsdarstellung oder bei entsprechend hoher Lichtleistung auch einer Beschriftung oder Materialbearbeitung dienen. Im einfachsten Fall kann es sich hierbei um die Darstellung einer eindimensionalen Figur bei Ablenkung in nur einer Richtung handeln. Im Allgemeinen wird der Lichtstrahl jedoch in zwei Richtungen abgelenkt, um ein flächiges Bild zu erzeugen.

Bei Verwendung einer gattungsgemäßen Vorrichtung für die Materialbearbeitung kann auch die Ablenkeinrichtung in Abhängigkeit von den Eingangsdaten angesteuert werden, um den Lichtstrahl auf einer bestimmten, durch die Bearbeitungsparameter vorgegebenen Bahn über den Bearbeitungsbereich der Bearbeitungsfläche zu führen, während die Lichtintensität gleichzeitig entsprechend moduliert wird.

Eine bekannte Vorrichtung der genannten Art ist auch in US-A-2002 196226 beschrieben.

**Stand der Technik**

Gattungsgemäße Vorrichtungen sind als Mikroscanner oder als feinmechanisch gefertigte Scanner realisiert, die sowohl resonant als auch quasistatisch betrieben werden können. Die WO 03/032046 A1 zeigt bspw. eine Projektionsvorrichtung, wie sie zur Darstellung von Bildern, Mustern, Schriftzeichen oder Symbolen oder zur Belichtung eines photoempfindlichen Materials verwendet wird. Diese Projektionsvorrichtung umfasst eine Ablenkeinrichtung zum Ablenken eines Lichtsstrahls um eine erste Ablenkachse mit einer ersten Ablenkfrequenz und um eine zweite Ablenkachse mit einer zweiten Ablenkfrequenz, um den Lichtstrahl über den Bildbereich zu bewegen. Die Intensität des Lichtstrahls wird mit einer Modulationseinrichtung abhängig von dem zu projizierenden Bild moduliert. Die Ablenkeinrichtung weist in einer Ausgestaltung dieser Druckschrift eine Einrichtung zum Ausblenden der Lichtquelle auf, sobald der Lichtstrahl durch die Ablenkeinrichtung in einen Randbereich der Projektionsfläche abgelenkt wird. In diesem Zusammenhang wird erläutert, dass dies bspw. durch Abschalten der Lichtquelle in diesem Randbereich erreicht werden kann und der Homogenisierung der Bildpunktdichte bei der Projektion dient.

Beim Einsatz leistungsstarker Lichtquellen, wie bspw. Lasern, zur Erzeugung hoher Lichtleistungen, wie sie insbesondere bei der Materialbearbeitung erforderlich sind, heizt sich der bewegliche Ablenkspiegel der Ablenkeinrichtung aufgrund der endlichen Absorption auf. Dies kann zu einer thermisch induzierten Verkrümmung des Spiegels und/oder, bspw. bei über Federn aufgehängten Mikroscannerspiegeln, zu einer Veränderung der Federkonstanten führen. Die Verkrümmung des Spiegels führt zu einer Defokussierung, die Veränderung der Federkonstanten, insbesondere bei resonant betriebenen Mikroscannern, zu einer Veränderung der Schwingungsamplitude oder zu einer Desynchronisierung mit dem Bilddatenstrom. Dabei ist die vom Spiegel aufgenommene mittlere Leistung im Allgemeinen zeitlich nicht konstant, da sich die mittlere Intensität des Lichtstrahls gemäß dem darzustellenden Bild oder der vorzunehmenden Materialbearbeitung ändert. Damit wird selbst nach einer Aufwärmphase der Vorrichtung keine konstante Spiegeltemperatur erreicht.

Zur Vermeidung dieser Problematik können größere Spiegel prinzipiell gekühlt werden. Diese Kühlung ist jedoch aufwendig und insbesondere bei über Federn aufgehängten Mikroscannerspiegeln technisch nicht sinnvoll realisierbar, da die Kühlung mit sehr gutem Wärmekontakt zum Spiegel erfolgen muss. Für Mikroscannerspiegel ist daher keine technische Lösung zur Vermeidung der obigen Problematik bekannt.

Die Aufgabe der vorliegenden Erfindung besteht darin, eine Vorrichtung sowie ein Verfahren zur Bildprojektion und/oder Materialbearbeitung anzugeben, bei denen Temperaturschwankungen auf Strahlablenkelementen der Ablenkeinrichtung während der Projektion und/oder Bearbeitung deutlich reduziert sind.

## Darstellung der Erfindung

Die Aufgabe wird mit der Vorrichtung gemäß Patentanspruch 1 sowie dem Verfahren gemäß Patentanspruch 11 gelöst. Vorteilhafte Ausgestaltungen der Vorrichtung sowie des Verfahrens sind Gegenstand der Unteransprüche oder lassen sich der nachfolgenden Beschreibung sowie den Ausführungsbeispielen entnehmen.

Die vorliegende Vorrichtung zur Bildprojektion und/oder Materialbearbeitung weist eine Ablenkreinrichtung zur variablen Ablenkung eines von einer Lichtquelle ausgehenden Lichtstrahls auf eine Projektions-oder Bearbeitungsfläche, eine Modulationseinrichtung zur Modulation einer Intensität des Lichtstrahls und eine mit der Modulationseinrichtung verbundene Steuereinheit auf, mit der die Modulationseinrichtung zur Modulation der Intensität des Lichtstrahls in Abhängigkeit von Eingangsdaten ansteuerbar ist. Die Vorrichtung zeichnet sich dadurch aus, dass zwischen der Ablenkeinrichtung und der Projektions- oder Bearbeitungsfläche ein Abschattungselement angeordnet ist, durch das der Lichtstrahl innerhalb mehrerer Zeitintervalle, in die die Gesamtdauer der Projektion und/oder Bearbeitung unterteilbar ist, jeweils für einen oder mehrere Zeitabschnitte ausgeblendet wird, und die Steuereinheit ein Steuerprogramm beinhaltet, das die Modulationseinrichtung während dieser Zeitabschnitte jeweils so steuert, dass sich eine zumindest annähernd konstante mittlere Intensität des Lichtstrahls in den Zeitintervallen ergibt.

Bei dem zugehörigen Verfahren wird der Lichtstrahl mittels der Ablenkeinrichtung über einen Bild- oder Bearbeitungsbereich der Projektions- oder Bearbeitungsfläche geführt und gleichzeitig in Abhängigkeit von den Eingangsdaten in der Intensität moduliert, um eine den Eingangsdaten entsprechende Bilddarstellung oder Materialbearbeitung zu erreichen. Die Gesamtdauer der Projektion und/oder Bearbeitung wird bei dem Verfahren in mehrere Zeitintervalle unterteilt. Der Lichtstrahl wird zwischen der Ablenkeinrichtung und der Projektions- oder Bearbeitungsfläche jeweils für einen oder mehrere Zeitabschnitte innerhalb jedes Zeitintervalls ausgeblendet und in diesen Zeitabschnitten derart in der Intensität angepasst, dass in allen Zeitintervallen eine zumindest annähernd konstante mittlere Intensität des Lichtstrahls erreicht wird.

Durch diese zeitweise Ausblendung des Lichtstrahls, die durch das Abschattungselement alleine oder durch das Zusammenwirken der Ablenkeinrichtung mit dem Abschattungselement erfolgt, und die entsprechende Steuerung der Lichtintensität lässt sich ein annähernd konstanter Wärmeeintrag in das Ablenkelement und somit bei Wahl geeignet kurzer Zeitintervalle eine zeitlich konstante Temperatur dieses Ablenkelementes bei der Bildprojektion oder Materialbearbeitung erreichen. Die Bildprojektion bzw. Materialbearbeitung erfolgt dabei mit dem den Eingangsdaten entsprechenden Intensitätsverlauf des Lichtstrahls, wobei selbstverständlich die Ausblendpausen berücksichtigt werden. Durch die zeitweise Ausblendung ist es jedoch möglich, die Lichtintensität innerhalb dieser Zeitabschnitte, in denen der Lichtstrahl in gleicher Weise über das Ablenkelement geführt wird, ohne Einfluss auf die Bildprojektion oder Materialbearbeitung so anzupassen, dass sich für jedes vorgegebene Zeitintervall die gleiche mittlere Intensität des Lichtstrahls ergibt. Unterschiede im Verlauf der Intensität des Lichtstrahls für die Bildprojektion oder Materialbearbeitung von Zeitintervall zu Zeitintervall lassen sich damit auf einfache Weise ausgleichen.

Die Unterschiede im Verlauf der Intensität sind dabei aus den Eingangsdaten, die Zeitabschnitte der Ausblendung aus der Anordnung des Abschattungselementes und den Ablenkparametern der Ablenkeinrichtung bekannt.

Die Ausblendung des Lichtstrahls lässt sich bspw. durch einen optischen Shutter erreichen, der im Strahlengang zwischen der Ablenkeinrichtung und der Projektionsfläche angeordnet ist und den Lichtstrahl zu bestimmten Zeitpunkten, beispielsweise periodisch, unterbricht. In der bevorzugten Ausgestaltung der vorliegenden Vorrichtung sowie des vorliegenden Verfahrens wird jedoch ein Abschattungselement eingesetzt, das den Bild- oder Bearbeitungsbereich auf der Projektions- oder Bearbeitungsfläche zumindest auf einer Seite mit einem Rand begrenzt, wobei der Lichtstrahl durch die Ablenkeinrichtung während der Projektion und/oder Bearbeitung wiederholt auf den Rand geführt wird, um die Ausblendung zu erreichen. Der von der Ablenkeinrichtung abgedeckte Bereich (Scanbereich) ist somit größer als der durch das Abschattungselement begrenzte Bild- bzw. Bearbeitungsbereich.

Die Funktionsweise der Vorrichtung sowie des Verfahrens wird im Folgenden nochmals beispielhaft anhand der Bildprojektion einer Bildfolge erläutert, wobei sich diese Ausführungen selbstverständlich ohne Weiteres auch auf Zeitintervalle bei der Materialbearbeitung übertragen lassen. Die im vorliegenden Beispiel der Bildprojektion gewählten Zeitintervalle entsprechen jeweils der Zeitdauer für die Darstellung eines Bildes. Sie können selbstverständlich auch größer oder kleiner als die Darstellungszeit eines Bildes ausfallen und werden in erster Linie in Abhängigkeit von der Wärmeausbreitung auf dem Ablenkelement gewählt, um möglichst geringe oder keine Temperaturschwankungen des Ablenkelementes zu erreichen. Auch die Dauer der Zeitintervalle kann während der Projektion oder Bearbeitung variieren.

Benötigt der Lichtstrahl die Zeit t für die Darstellung des gesamten Bildes, so setzt sich dieses Zeitintervall aus der Zeit $t_1$ für den Teil, der zur Abbildung kommt und der Zeit $t_2$ für den Teil, der ausgeblendet wird, zusammen. Es gilt: $t = t_1 + t_2$. Wird bei Bild n für $t_1$ die mittlere Intensität $I_{mittel,1,n}$ für die Abbildung verwendet, wobei im Allgemeinen $I_{mittel,1,n} \neq I_{mittel,2,k}$ mit $k \neq n$, so wird nun während $t_2$ die Intensität $I_{mittel,2,n}$ so eingestellt, dass in jedem der Intervalle

$$I_{mittel,1} \times t_1 + I_{mittel,2} \times t_2 = konstant. \qquad (1)$$

Damit wird über den Spiegel stets die gleiche mittlere Intensität geführt, wobei der zur Abbildung gelangende Teil des Lichtstrahls bei geeigneter Wahl der Parameter beliebig variieren kann.

Die vorliegende Vorrichung sowie das zugehörige Verfahren lassen sich mit beliebigen Ablenkeinrichtungen, Lichtquellen und Modulationseinrichtungen einsetzen.

So können in bekannter Weise Mikroscanner, feinmechanisch gefertigte Scanner, Vektorscanner, resonant betriebene Scanner oder quasistatische Scanner als Ablenkeinrichtung eingesetzt werden. Die Ablenkeinrichtung umfasst vorzugsweise uniaxial oder biaxial bewegliche Spiegel als Ablenkelemente, wobei durch zwei hintereinander geschaltete uniaxial bewegliche Spiegel, deren Bewegungsachsen senkrecht aufeinander stehen, in gleicher Weise eine zweidimensionale Strahlablenkung erreicht werden kann, wie beim Einsatz eines biaxial beweglichen Spiegels. Die vorliegende Vorrichtung und das zugehörige Verfahren lassen sich auch mit Ablenkeinrichtungen realisieren, die nur in einer Dimension auslenken.

Die Lichtquelle kann Bestandteil der Vorrichtung sein oder auch getrennt von der Vorrichtung bereit gestellt werden, wobei dann der Lichtstrahl entsprechend eingekoppelt wird. Als Lichtquellen können neben den häufig eingesetzten Lasern und Leuchtdioden auch allgemein thermische Lichtquellen oder Gasentladungslampen genutzt werden. Selbstverständlich lässt sich die Vorrichtung auch mit gepulster Lichtstrahlung betreiben.

Die Modulationseinrichtung kann entweder direkt die Ausgangsleistung der Lichtquelle steuern oder als separater Modulator im Lichtstrahl angeordnet sein. Bei bekannten Projektionsvorrichtungen wird der Kontrast hierbei durch An- und Ausschalten des Lichtstrahls bzw. durch Graustufenmodulation erreicht. Diese Technik lässt sich auch bei der vorliegenden Vorrichtung und dem vorliegenden Verfahren nutzen.

Selbstverstädnlich umfasst die vorliegende Vorrichtung bei Bedarf auch die in vielen Anwendungsfällen erforderliche Fokussieroptik, mit der der Lichtstrahl in der Regel auf die Projektions-oder Bearbeitungsfläche fokussiert wird.

**Kurze Beschreibung der Zeichnungen**

Die vorliegende Vorrichtung sowie das zugehörige Verfahren werden nachfolgend anhand von Ausführungsbeispielen in Verbindung mit den Zeichnungen nochmals kurz erläutert. Hierbei zeigen:

Fig. 1    ein Beispiel für eine Ausgestaltung der vorliegenden Vorrichtung zur Bildprojektion;

Fig. 2    einen Bereich des Beispiels der Figur 1 in einer anderen Ansicht; und

Fig. 3    Beispiele für Abschattungselemente, wie sie bei der vorliegenden Vorrichtung und dem vorliegenden Verfahren zum Einsatz kommen können.

**Wege zur Ausführung der Erfindung**

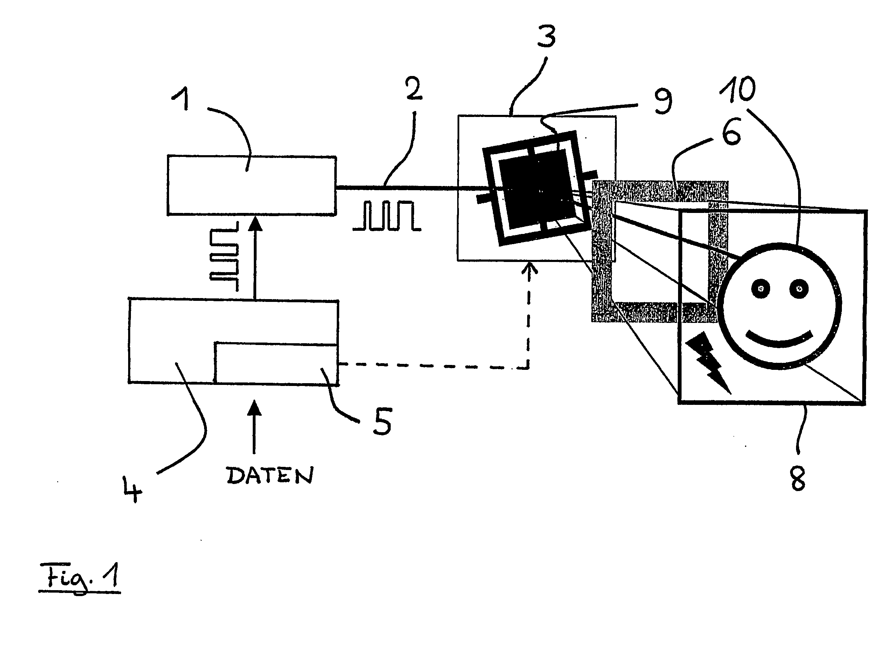

Figur 1 zeigt schematisiert ein Beispiel für eine mögliche Ausgestaltung der vorliegenden Vorrichtung. Die Figur ist zur besseren Verständlichkeit nicht maßstabsgerecht ausgeführt und stellt eine Vorrichtung zur monochromen Darstellung eines Bildes dar. Die Vorrichtung setzt sich in diesem Beispiel aus einem Laser 1 als Lichtquelle, der Ablenkeinrichtung 3, einer Blende 6 als Abschattungselement zwischen der Ablenkeinrichtung 3 und der Projektionsfläche 7, der Modulationseinrichtung 4 sowie der Steuereinheit 5 zusammen. Die Blende 6 sollte selbstverständlich in einem geeignet großen Abstand zur Projektionsfläche 7, d. h. möglichst nahe an der Ablenkeinrichtung 3 angeordnet sein, um Streuungs- und Beugungseffekte zu vermeiden. Die Ablenkeinrichtung 3 umfasst einen biaxial beweglichen Mikrospiegel 9 als Ablenkelement. Die Bilddaten werden der mit der Modulationseinheit 4 verbundenen Steuereinheit 5 zugeführt und dort entsprechend des in diesem Falle festen Zusammenhangs zwischen Zeit und Auslenkwinkel der Ablenkeinrichtung 3 aufbereitet. Die Steuereinheit 5 veranlasst dann die Modulationseinheit 3 zur Steuerung der Intensität des Lasers 1, der damit einen entsprechend in der Intensität modulierten Laserstrahl 2 emittiert. Der Laserstrahl 2 wird von der Ablenkeinrichtung 3, insbesondere von deren biaxial beweglich aufgehängten Spiegel 9, über die Projektionsfläche 7 bewegt. Dabei wird der Randbereich der Projektionsfläche 7 durch die Blende 6 ausgeschnitten, so dass sich ein durch die Blendenöffnung begrenzter Bildbereich 8 zur Darstellung des Bildes 10 ergibt. Die Ablenkeinrichtung 3 tastet somit mit dem Laserstrahl 2 einen größeren Raumwinkelbereich ab, als auf der Projektionsfläche sichtbar ist. Die Modulation des Laserstrahls 2 zur Darstellung des Bildes 10 erfolgt nur innerhalb des Bildbereiches 8. Außerhalb des Bildbereiches 8 trifft der Laserstrahl auf die Blende 6, so dass er während dieses Zeitabschnittes nicht zur Bilddarstellung beiträgt. Um die mittlere Lichtleistung, die über den Spiegel 9 geführt wird, von Bild zu Bild konstant zu halten, wird gemäß der im vorangehenden Abschnitt angeführten Gleichung (1) die Lichtintensität während dieses Zeitabschnittes durch die Modulationseinrichtung 4 entsprechend angepasst. Auf diese Weise kann eine annähernd konstante Temperatur des Spiegels 9 während der gesamten Projektion gewährleistet werden. Die Zeitintervalle, die für eine konstante mittlere Intensität gewählt werden, sind in ihrer Länge abhängig von der Wärmeausbreitung auf dem Ablenkelement, im vorliegenden Beispiel dem Spiegel 9. So kann bei Ablenkelementen mit verhältnismäßig großer Wärmekapazität bspw. eine Mittelung über mehrere Bilder verwendet, d.h. die Zeitintervalle für die Mittelung entsprechend groß gewählt werden. Bei verhältnismäßig kleiner Wärmekapazität der Ablenkelemente kann es dagegen vorteilhaft sein, bspw. bei rasterförmiger Ablenkung sogar von Zeile zu Zeile eine Mittelung durchzuführen.

Figur 2 zeigt den gleichen Aufbau ohne die Modulationseinrichtung, die Steuereinheit und den Laser, diesmal allerdings in einer Ansicht, bei der die Projektion weg vom Betrachter erfolgt.

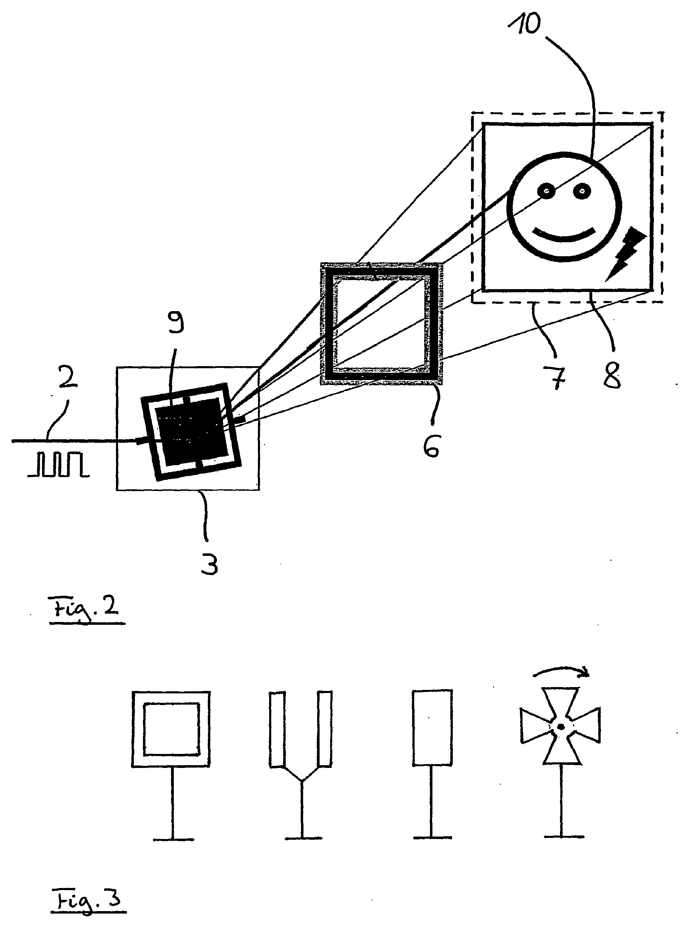

Neben einer Blende als Abschattungselement lassen sich bei der vorliegenden Vorrichtung und dem vorliegenden Verfahren auch andere Abschattungselemente einsetzen, von denen beispielhaft einige in der Figur 3 angeführt sind. Die Figur 3 zeigt hierbei von links nach rechts zunächst die bekannte Blende, dann ein den Bildbereich nur zweiseitig begrenzendes Element, als nächstes ein den Bildbereich nur einseitig begrenzendes Element bspw. eine einfache Metallplatte, und schließlich einen optischen Shutter, der mit konstanter Frequenz, wie mit dem Pfeil angedeutet, rotiert, so dass er den Lichtstrahl periodisch unterbricht.

## Bezugszeichenliste

| 1  | Laser |
|----|-------|
| 2  | Laserstrahl |
| 3  | Ablenkeinrichtung |
| 4  | Modulationseinrichtung |
| 5  | Steuereinheit |
| 6  | Blende |
| 7  | Projektions- oder Bearbeitungsfläche |
| 8  | Bild- oder Bearbeitungsbereich |
| 9  | Biaxial beweglicher Mikrospiegel |
| 10 | Bild |

## Patentansprüche

1. Vorrichtung zur Bildprojektion- und/oder Materialbearbeitung, die eine Ablenkeinrichtung (3) zur variablen Ablenkung eines von einer Lichtquelle (1) ausgehenden Lichtstrahls (2) auf eine Projektions- oder Bearbeitungsfläche (7), eine Modulationseinrichtung (4) zur Modulation einer Intensität des Lichtstrahls (2) und eine mit der Modulationseinrichtung (4) verbundene Steuereinheit (5) aufweist, mit der die Modulationseinrichtung (4) zur Modulation der Intensität des Lichtstrahls (2) in Abhängigkeit von Eingangsdaten ansteuerbar ist,
   **dadurch gekennzeichnet,**
   **dass** zwischen der Ablenkeinrichtung (3) und der Projektions- oder Bearbeitungsfläche (7) ein Abschattungselement (6) angeordnet ist, durch das der Lichtstrahl (2) innerhalb mehrerer Zeitintervalle, in die eine Gesamtdauer der Projektion oder Bearbeitung unterteilt ist, jeweils für einen oder mehrere Zeitabschnitte ausgeblendet wird, und die Steuereinheit (5) ein Steuerprogramm beinhaltet, das die Modulationseinrichtung (4) während dieser Zeitabschnitte jeweils so steuert, dass sich eine zumindest annähernd konstante mittlere Intensität des Lichtstrahls (2) in den Zeitintervallen ergibt.

2. Vorrichtung nach Anspruch 1,
   **dadurch gekennzeichnet,**
   **dass** das Abschattungselement (6) mit einem Rand zumindest auf einer Seite eine Begrenzung eines Bild- oder Bearbeitungsbereiches (8) auf der Projektions- oder Bearbeitungsfläche (7) vorgibt, wobei die Ablenkeinrichtung (3) so ausgebildet ist oder angesteuert wird, dass der Lichtstrahl (2) während der Projektion oder Bearbeitung wiederholt auch auf Bereiche des Randes des Ablenkelementes (6) abgelenkt wird.

3. Vorrichtung nach Anspruch 1,
   **dadurch gekennzeichnet,**
   **dass** das Abschattungselement (6) eine Blende ist, deren Blendenöffnung eine Begrenzung eines Bild- oder Bearbeitungsbereiches (8) auf der Projektions- oder Bearbeitungsfläche (7) vorgibt, wobei die Ablenkeinrichtung (3) so ausgebildet ist oder angesteuert wird, dass der Lichtstrahl (2) während der Projektion oder Bearbeitung wiederholt auch auf Bereiche der Blende ausserhalb der Blendenöffnung abgelenkt wird.

4. Vorrichtung nach Anspruch 1,
   **dadurch gekennzeichnet,**
   **dass** das Abschattungselement (6) ein optischer Shutter ist, der den Lichtstrahl (2) während der Projektion oder Bearbeitung periodisch blockiert und wieder frei gibt.

5. Vorrichtung nach einem der Ansprüche 1 bis 4,
   **dadurch gekennzeichnet,**
   **dass** die Ablenkeinrichtung (3) einen oder mehrere uniaxial bewegliche Spiegel umfasst.

6. Vorrichtung nach einem der Ansprüche 1 bis 4,
   **dadurch gekennzeichnet,**
   **dass** die Ablenkeinrichtung (3) zumindest einen biaxial beweglichen Spiegel umfasst.

7. Vorrichtung nach einem der Ansprüche 1 bis 6,
   **dadurch gekennzeichnet,**
   **dass** die Ablenkeinrichtung (3) ein Mikroscanner ist.

8. Vorrichtung nach einem der Ansprüche 1 bis 7,
   **dadurch gekennzeichnet,**
   **dass** die Vorrichtung die Lichtquelle (1) umfasst.

9. Vorrichtung nach Anspruch 8,
   **dadurch gekennzeichnet,**
   **dass** die Lichtquelle (1) durch einen oder mehrere Laser oder Leuchtdioden gebildet ist.

10. Vorrichtung nach einem der Ansprüche 1 bis 9,
    **dadurch gekennzeichnet,**
    **dass** die Steuereinheit (5) mit der Ablenkeinrichtung (3) verbunden und so ausgebildet ist, dass die Ablenkeinrichtung (3) durch die Steuereinheit (5) in Abhängigkeit von den Eingangsdaten zur Bewegung des Lichtstrahls (2) über der Projektions- oder Bearbeitungsfläche (7) ansteuerbar ist.

11. Verfahren zur Bildprojektion und/oder zur Materialbearbeitung, bei dem ein Lichtstrahl (2) mittels einer Ablenkeinrichtung (3) über einen Bild- oder Bearbeitungsbereich (8) einer Projektions- oder Bearbeitungsfläche (7) geführt und gleichzeitig in Abhängigkeit von Eingangsdaten in der Intensität moduliert wird, um eine den Eingangsdaten entsprechende Projektion oder Bearbeitung zu erreichen,
    **dadurch gekennzeichnet,**
    **dass** eine Gesamtdauer der Projektion oder Bearbeitung in mehrere Zeitintervalle unterteilt wird, der Lichtstrahl (2) zwischen der Ablenkeinrichtung (3) und der Projektions- oder Bearbeitungsfläche (7) jeweils für einen oder mehrere Zeitabschnitte jedes Zeitintervalls ausgeblendet und in diesen Zeitabschnitten derart in der Intensität angepasst wird, dass sich eine zumindest annähernd konstante mittlere Intensität des Lichtstrahls (2) in den Zeitintervallen ergibt.

12. Verfahren nach Anspruch 11,
    **dadurch gekennzeichnet,**
    **dass** zwischen zwischen der Ablenkeinrichtung (3) und der Projektions- oder Bearbeitungsfläche (7) ein Abschattungselement (6) zum Ausblenden eingesetzt wird, das mit einem Rand zumindest auf einer Seite eine Begrenzung eines Bild- oder Bearbeitungsbereiches (8) auf der Projektions-oder Bearbeitungsfläche (7) bildet, wobei der Lichtstrahl (2) mit der Ablenkeinrichtung (3) so abgelenkt wird, dass er während der Projektion oder Bearbeitung wiederholt auch auf Bereiche des Randes des Abschattungselementes (6) trifft.

**13.** Verfahren nach Anspruch 11,
**dadurch gekennzeichnet,**
**dass** zwischen zwischen der Ablenkeinrichtung (3) und der Projektions- oder Bearbeitungsfläche (7) eine Blende zum Ausblenden eingesetzt wird, deren Blendenöffnung eine Begrenzung eines Bild- oder Bearbeitungsbereiches (8) auf der Projektions-oder Bearbeitungsfläche (7) bildet, wobei der Lichtstrahl (2) mit der Ablenkeinrichtung (3) so abgelenkt wird, dass er während der Projektion oder Bearbeitung wiederholt auch auf Bereiche der Blende ausserhalb der Blendenöffnung trifft.

**14.** Verfahren nach einem der Ansprüche 11 bis 13 zur Projektion einer Bildfolge.

**15.** Verfahren nach einem der Ansprüche 11 bis 13 zur Visualisierung von Information auf der Projektionsfläche.

**16.** Verfahren nach einem der Ansprüche 11 bis 13 zur Durchführung einer Beschriftung der Bearbeitungsfläche.

**17.** Verfahren nach einem der Ansprüche 11 bis 13 zur Belichtung von photoempfindlichem Material.

**18.** Verwendung der Vorrichtung nach einem der Ansprüche 1 bis 10 zur Projektion einer Bildfolge.

**19.** Verwendung der Vorrichtung nach einem der Ansprüche 1 bis 10 zur Visualisierung von Information auf der Projektionsfläche.

**20.** Verwendung der Vorrichtung nach einem der Ansprüche 1 bis 10 zur Durchführung einer Beschriftung der Bearbeitungsfläche.

**21.** Verwendung der Vorrichtung nach einem der Ansprüche 1 bis 10 zur Belichtung von photoempfindlichem Material.


**Claims**

**1.** An apparatus for image projection and/or material processing having a deflection device (3) for variably deflecting a light beam (2) emanating from a light source (1) onto a projection area or a processing area (7), a modulation device (4) for modulating an intensity of the light beam (2) and a control unit (5) which is connected to the modulation device (4) and by means of which the modulation device (4) can be triggered to modulate the intensity of the light beam (2) according to input data,
**characterized in that**
disposed between the deflection device (3) and the projection area or the processing area (7) is a shading element (6), by means of which the light beam (2) is faded out within a multiplicity of time intervals, into which the total duration of the projection or the processing is subdivided, for one or a multiplicity of time segments, and the control unit (5) contains a control program which regulates the modulation device (4) during the time segments in such a manner that an at least approximately constant mean intensity of the light beam (2) is yielded in the time intervals.

**2.** An apparatus according to claim 1,
**characterized in that**
the shading element (6) provides a delimitation of an image region or processing region (8) by means of a margin on at least one side on the projection area or the processing area (7), with the deflection device (3) being designed or triggered in such a manner that during projection or processing, the light beam (2) is repeatedly deflected also to the regions of the margin of the shading element (6).

**3.** An apparatus according to claim 1,
**characterized in that**
the shading element (6) is a diaphragm whose diaphragm aperture provides a delimitation of an image region or processing region (8) on the projection area or the processing area (7), with the deflection device (3) being designed or triggered in such a manner that during projection or processing, the light beam (2) is repeatedly deflected also to regions of the diaphragm beyond the diaphragm aperture.

**4.** An apparatus according to claim 1,
**characterized in that**
the shading element (6) is an optical shutter, which blocks and releases the light beam (2) periodically during projection or processing.

5. An apparatus according to one of the claims 1 to 4,
   **characterized in that**
   the deflection device (3) comprises one or a multiplicity of uniaxially movable mirrors.

6. An apparatus according to one of the claims 1 to 4,
   **characterized in that**
   the deflection device (3) comprises at least one biaxially movable mirror.

7. An apparatus according to one of the claims 1 to 6,
   **characterized in that**
   the deflection device (3) is a microscanner.

8. An apparatus according to one of the claims 1 to 7,
   **characterized in that**
   the apparatus comprises the light source (1).

9. An apparatus according to claim 8,
   **characterized in that**
   the light source (1) is formed by one or a multiplicity of lasers or light diodes.

10. An apparatus according to one of the claims 1 to 9,
    **characterized in that**
    the control unit (5) is connected to the deflection device (3) and designed in such a manner that the deflection device (3) can be triggered by the control unit (5) according to the input data to move the light beam (2) over the projection area or the processing area (7).

11. A method for projecting images and/or processing materials in which a light beam (2) is conveyed by means of a deflection device (3) over an image region or a processing region (8) of a projection area or a processing area (7) and is simultaneously modulated in intensity according to input data in order to achieve projection or processing according to the input data,
    **characterized in that**
    a total duration of the projection or the processing is subdivided into a multiplicity of time intervals, the light beam (2) is faded out between the deflection device (3) and the projection area or the processing area (7) for one or a multiplicity of time segments of each time interval and is adjusted in intensity in these time segments in such a manner that an at least approximately constant mean intensity of the light beam (2) is yielded in the time intervals.

12. A method according to claim 11,
    **characterized in that**
    between the deflection device (3) and the projection area or the processing area (7), a shading element (6) is provided to fade out, which forms a delimitation by means of a margin at least on one side of an image region or a processing region (8) on the projection area or the processing area (7), with the light beam (2) being deflected by the deflection device (3) in such a manner that during projection or processing, the laser beam (2) repeatedly impinges also on regions of the margin of the shading element (6).

13. A method according to claim 11,
    **characterized in that**
    between the deflection device (3) and the projection area or the processing area (7), a diaphragm is provided to fade out, whose diaphragm aperture forms a delimitation of an image region or a processing region (8) on the projection area or the processing area (7), with the light beam (2) being deflected by the deflection device (3) in such a manner that the light beam (2) repeatedly impinges also on the regions of the diaphragm beyond the diaphragm aperture.

14. A method according to one of the claims 11 to 13 to project a sequence of images.

15. A method according to one of the claims 11 to 13 to visualize information on the projection area.

**16.** A method according to one of the claims 11 to 13 to letter the processing area.

**17.** A method according to one of the claims 11 to 13 to expose photosensitive material

**18.** Use of the apparatus according to one of the claims 1 to 10 to project a sequence of images.

**19.** Use of the apparatus according to one of the claims 1 to 10 to visualize information on the projection area.

**20.** Use of the apparatus according to one of the claims 1 to 10 to letter the processing area.

**21.** Use of the apparatus according to one of the claims 1 to 10 to expose photosensitive material.

**Revendications**

**1.** Dispositif de projection d'images et/ou de traitement matériel, comportant un dispositif de déviation (3) pour la déviation variable d'un rayon lumineux (2) provenant d'une source lumineuse (1) sur une surface de projection ou de traitement (7), un dispositif de modulation (4) pour la modulation d'une intensité du rayon lumineux (2) et une unité de commande (5) reliée au dispositif de modulation (4) et grâce à laquelle le dispositif de modulation (4) pour la modulation de l'intensité du rayon lumineux (2) peut être commandé en fonction de données de départ,
**caractérisé en ce que**,
entre le dispositif de déviation (3) et la surface de projection ou de traitement (7), est disposé un élément de projection d'ombre (6) grâce auquel le rayon lumineux (2), pendant plusieurs intervalles de temps en lesquels une durée totale de projection ou de traitement est subdivisée, est masqué respectivement pour un ou plusieurs laps de temps et que l'unité de commande (5) inclut un programme de commande qui contrôle respectivement le dispositif de modulation (4) pendant ces laps de temps de manière à obtenir une intensité moyenne au moins approximativement constante du rayon lumineux (2) dans les intervalles de temps.

**2.** Dispositif selon la revendication 1,
**caractérisé en ce que**
l'élément de projection d'ombre (6) définit par un bord, du moins d'un côté, une limitation d'une zone d'images ou de traitement (8) sur la surface de projection ou de traitement (7), tandis que le dispositif de déviation (3) est réalisé ou commandé de manière à ce que le rayon lumineux (2), pendant la projection ou le traitement, soit aussi dévié de manière également sur des zones du bord de l'élément de déviation (6).

**3.** Dispositif selon la revendication 1,
**caractérisé en ce que**
l'élément de projection d'ombre (6) est un diaphragme dont l'ouverture optique définit une limitation d'une zone d'image ou de traitement (8) sur la surface de projection ou de traitement (7), tandis que le dispositif de déviation (3) est réalisé ou commandé de manière à ce que le rayon lumineux (2), pendant la projection ou le traitement, soit aussi dévié de manière répétée sur des zones du diaphragme en dehors de l'ouverture optique.

**4.** Dispositif selon la revendication 1,
**caractérisé en ce que**
l'élément de projection d'ombre (6) est un volet optique qui bloque périodiquement et libère à nouveau le rayon lumineux (2) pendant la projection ou le traitement.

**5.** Dispositif selon une des revendications 1 à 4,
**caractérisé en ce que**
le dispositif de déviation (3) englobe un ou plusieurs miroirs mobiles monoaxialement.

**6.** Dispositif selon une des revendications 1 à 4,
**caractérisé en ce que**
le dispositif de déviation (3) englobe au moins un miroir mobile biaxialement.

**7.** Dispositif selon une des revendications 1 à 6,
**caractérisé en ce que**
le dispositif de déviation (3) est un microscanner.

**8.** Dispositif selon une des revendications 1 à 7,
**caractérisé en ce que**
le dispositif englobe la source lumineuse (1).

**9.** Dispositif selon la revendication 8,
**caractérisé en ce que**
la source lumineuse (1) est constituée par un ou plusieurs lasers ou diodes électroluminescentes.

**10.** Dispositif selon une des revendications 1 à 9,
**caractérisé en ce que**
l'unité de commande (5) est reliée au dispositif de déviation (3) et réalisée de manière à ce que le dispositif de déviation (3) puisse être commandé par l'unité de commande (5) en fonction des données de départ pour déplacer le rayon lumineux (2) sur la surface de projection ou de traitement (7).

**11.** Procédé de projection d'images et/ou de traitement matériel, dans lequel un rayon lumineux (2) est guidé au moyen d'un dispositif de déviation (3) sur une zone d'images ou de traitement (8) d'une surface de projection ou de traitement (7) et en même temps modulé en intensité en fonction de données de départ afin d'obtenir une projection ou un traitement correspondant aux données de départ,
**caractérisé en ce que**
une durée totale de projection ou de traitement est subdivisée en plusieurs intervalles de temps, le rayon lumineux (2) entre le dispositif de déviation (3) et la surface de projection ou de traitement (7) est masqué respectivement pour un ou plusieurs laps de temps et adapté en intensité pendant ces laps de temps de manière à obtenir une intensité moyenne au moins approximativement constante du rayon lumineux (2) dans les intervalles de temps.

**12.** Procédé selon la revendication 11,
**caractérisé en ce que**,
entre le dispositif de déviation (3) et la surface de projection ou de traitement (7), on insère un élément de projection d'ombre (6) servant à masquer, qui constitue par un bord, au moins d'un côté, une limitation d'une zone d'images ou de traitement (8) sur la surface de projection ou de traitement (7), tandis que le rayon lumineux (2) est dévié à l'aide du dispositif de déviation (3) de manière à ce que, pendant la projection ou le traitement, il arrive aussi de manière répétée sur des zones du bord de l'élément de projection d'ombre (6).

**13.** Procédé selon la revendication 11,
**caractérisé en ce que**,
entre le dispositif de déviation (3) et la surface de projection ou de traitement (7), on insère un diaphragme servant à masquer, dont l'ouverture optique définit une limitation d'une zone d'images ou de traitement (8) sur la surface de projection ou de traitement (7), tandis que le rayon lumineux (2) est dévié à l'aide du dispositif de déviation (3) de manière à ce que, pendant la projection ou le traitement, il arrive aussi de manière répétée sur des zones du diaphragme en dehors de l'ouverture optique.

**14.** Procédé selon l'une des revendications 11 à 13 pour la projection d'une succession d'images.

**15.** Procédé selon l'une des revendications 11 à 13 pour la visualisation d'informations sur la surface de projection.

**16.** Procédé selon l'une des revendications 11 à 13 pour la réalisation d'inscriptions sur la surface de traitement.

**17.** Procédé selon l'une des revendications 11 à 13 pour l'exposition de matière photosensible.

**18.** Utilisation du dispositif selon l'une des revendications 1 à 10 pour la projection d'une succession d'images.

**19.** Utilisation du dispositif selon l'une des revendications 1 à 10 pour la visualisation d'informations sur la surface de projection.

**20.** Utilisation du dispositif selon l'une des revendications 1 à 10 pour la réalisation d'inscriptions sur la surface de traitement.

**21.** Utilisation du dispositif selon l'une des revendications 1 à 10 pour l'exposition de matière photosensible.

Fig. 1

DATEN

EP 1 652 377 B1

Fig. 2

Fig. 3